# EUROPÄISCHE PATENTSCHRIFT

(11) **EP 0 761 734 B1**
(45) Veröffentlichungstag und Bekanntmachung des Hinweises auf die Patenterteilung: **29.05.2002**
(21) Anmeldenummer: 96890140.5
(22) Anmeldetag: 04.09.1996
(51) Int. Cl.: C08K 5/04, C08L 21/00, B60C 1/00

(54) **Kautschukmischung**
Rubber composition
Composition de caoutchouc

(30) Priorität: 07.09.1995 AT 148295
(43) Veröffentlichungstag der Anmeldung: 12.03.1997
(73) Patentinhaber: Semperit Reifen Gesellschaft m.b.H-, 2514 Traiskirchen (AT)
(72) Erfinder: Beckmann, Otto, Dr., 2514 Traiskirchen (AT); Teves, Reinhard, Dr., 30926 Seelze (DE); Bertrand, Joachim, Dr., 30926 Seelze (DE)
(74) Vertreter: Vinazzer, Edith, Dipl.-Ing.

(56) Entgegenhaltungen:
- JP-A- 1 110 999
- US-A- 2 059 448
- US-A- 2 760 632

## Beschreibung

Die Erfindung betrifft eine vulkanisierbare Kautschukmischung für den Laufstreifen eines Fahrzeugreifens, auf der Basis zumindest eines Polymers aus der Gruppe der Dienkautschuke, enthaltend weiters, jeweils bezogen auf 100 Gewichtsteile Kautschuk in der Mischung, 5 bis 100 Gewichtsteile fein verteilte gefällte Kieselsäure, 0 bis 80 Gewichtsteile Ruß, gegebenenfalls 0,2 bis 10 Gewichtsteile Silan-Kupplungsmittel und 0,5 bis 20 Gewichtsteile zumindest einer nichtaromatischen viskositätssenkenden Substanz.

Um eine Verminderung des Rollwiderstandes und eine Verbesserung weiterer Reifeneigenschaften, wie beispielsweise Naßgriff oder Abrieb, zu erzielen, ist es derzeit relativ weit verbreitet, Kautschukmischungen für Reifenlaufstreifen zu verwenden, die in Lösung hergestellten Styrolbutadienkautschuk, meist in Kombination mit wenigstens einem anderen Dienelastomer und fein verteilte gefällte Kieselsäure als verstärkenden Füllstoff enthält. Die Kieselsäure wird dabei entweder allein oder in Kombination mit Ruß eingesetzt. Derartige Kautschukmischungen für Laufstreifen von Reifen sind beispielsweise aus der EP-A 0 501 227 oder aus der EP-A 0 447 066 bekannt.

Beim Einsatz von gefällter Kieselsäure anstelle von Aktivruß in Kautschukmischungen, die auf Standardpolymeren, wie beispielsweise Naturkautschuk, Isoprenkautschuk, Butadienkautschuk oder Styrolbutadienkautschuk basieren, wird eine stark erhöhte Viskosität der unvulkanisierten Mischung beobachtet. Die erhöhte Viskosität ist auf den Aufbau eines Kieselsäurenetzwerkes zurückzuführen, bei dem die Primärpartikelchen mittels der an ihrer Oberfläche vorliegenden Silanolgruppen untereinander Wasserstoffbrücken ausbilden.

Es ist bereits eine Reihe von Maßnahmen bekannt und auch gebräuchlich, um die bei der Verarbeitung störende hohe Viskosität zu senken. In diesem Zusammenhang wird beispielsweise auf die Veröffentlichungen "Reinforcing Silicas and Silicates" in "Rubber Chemistry and Technology", 49/3, Seiten 703 bis 774 (1976) von M. P. Wagner oder auf "The Effects of Surface Chemical Interaction on the Properties of filler-reinforced Rubbers" in "Rubber Chemistry and Technology", 48/3, Seiten 410 bis 461 (1975) von E. N. Dannenberg verwiesen. In diesen Publikationen wird der Einsatz von Metallseifen, vornehmlich Zinkseifen, die zusätzlich die Formbarkeit der Mischung verbessern, sowie der Einsatz diverser Kupplungsagenzien, vornehmlich Silanen, vorgeschlagen beziehungsweise erwähnt. Bekannt ist ferner die viskositätssenkende Wirkung von Polyolen, Glycerin und Diethylenglykol. Eine Untersuchung der Wirkung unterschiedlicher Polyole in SBR-Kieselsäuremischungen ist beispielsweise in "Rubber Age", Mai 1968, Seiten 49 bis 57, von D. D. Dunnom, enthalten. Die größte Absenkung der Mischungsviskosität wurde bei einem Zusatz von 2-Methyl, 2,4-Pentandiol beziehungsweise 2,2,4-Trimethyl-1,3-Pentandiol festgestellt. Diese beiden Diole sind jedoch in Kautschukmischungen kaum brauchbar, da sie die Vernetzungsausbeute drastisch absenken. Bekannt ist ferner die viskositätssenkende Wirkung von Aminen, beispielsweise Triethanolamin und einigen Beschleunigern, wie beispielsweise Sulfenamiden.

Die viskositätssenkende Wirkung dieser verschiedenen Substanzen dürfte auf deren Adsorption an der Kieselsäureoberfläche zurückzuführen sein, indem sie die Wechselwirkung zwischen den Primärpartikeln abschwächen.

Mit der breiten Einführung von sogenannten Vollsilica-Mischungen in Laufstreifen von PKW-Reifen ist das Problem von hohen Mischungsviskositäten wieder aktuell geworden. Extrem hohe Mischungsviskositäten, gepaart mit schlechter Mischungsverarbeitung treten dabei insbesondere in Vollsilica-Mischungen mit relativ geringem Silangehalt oder einem geringen Gehalt an Zinkseifen auf.

Ziel der vorliegenden Erfindung ist es nun, für Silica-Mischungen effizientere viskositätssenkende Substanzen aufzufinden, die zusätzlich die Mischungsverarbeitung deutlich verbessern sollen. Dieses Ziel soll zudem mit toxikologisch unbedenklichen Substanzen erreicht werden, die zusätzlich keinerlei negative Effekte auf das erwünschte Werteniveau der vulkanisierten Mischung zeigen.

Gelöst wird die gestellte Aufgabe erfindungsgemäß dadurch, daß die viskositätssenkende nichtaromatische Substanz zumindest eine Substanz aus der Gruppe 1,2-Pentandiol, 2-Methyl-2-Propyl-1,3-Propandiol, 2-Butyl-2-Ethyl-1,3-Propandiol, 2-sec-Butyl-2-Methyl-1,3-Propandiol, Trimethytolpropan (2-Ethyl-2-Hydroxymethyl-1,3-Propandiol), Glycerin-mono-Stearat, Sorbitan-mono-Stearat oder Sorbitan-mono-Oleat umfaßt

Es hat sich herausgestellt, daß der Einsatz derartiger Substanzen in Kieselsäure enthaltenden Kautschukmischungen eine Viskositätssenkung der Mischung bewirkt, die gegenüber dem Einsatz von bekanntem viskositätssenkenden Materialien noch höher ist, wobei gleichzeitig eine sehr gute Verarbeitbarkeit der Kautschukmischung gewährleistet ist. Die im Rahmen der Erfindung vorgeschlagenen Substanzen sind darüber hinaus toxikologisch unbedenklich, ihr Einsatz gewährleistet die sonstigen erwünschten Eigenschaften der aus der erfindungsgemäßen Kautschukmischung hergestellten Vulkanisate. Von der Verarbeitbarkeit und der viskositätssenkenden Wirkung hat sich die Beimengung von Trimethylolpropan als besonders vorteilhaft herausgestellt.

Dabei sollte der Anteil der erfindungsgemäß der Kautschukmischung beigemengten viskositätssenkenden Substanz zwischen 1 und 10 Gewichtsteilen, bezogen auf 100 Gewichtsteile Kautschuk in der Mischung, betragen. Innerhalb dieses Mengenbereiches wurden die besten Resultate erzielt.

Die Erfindung betrifft weiters Fahrzeugreifen, deren Laufstreifen zumindest zum Teil aus der vulkanisierten erfindungsgemäßen Kautschukmischung besteht.

Die Erfindung wird nun anhand von einigen Ausführungsbeispielen, eines Standard- und zweier Vergleichsbeispiele, die in der anliegenden Tabelle 1 zusammengefaßt sind, näher beschrieben.

Bei sämtlichen in der Tabelle 1 enthaltenen Mischungsbeispielen sind die angegebenen Zahlenwerte Gewichtsteile, die auf 100 Gewichtsteile Kautschuk in der Mischung bezogen sind.

Sämtliche Mischungsrezepturen stimmen bezüglich des Polymerverschnittes, der Anteile an Ruß, Kieselsäure, Silan, aromatischem Öl, Zink-, Fettsäureseife, Stearinsäure, Zinkweiß, Alterungsschutzmittel, Lichtschutzwachs, Beschleuniger (DPG, CBS) und Schwefel überein. Den Mischungen wurden verschiedene viskositätssenkende Substanzen, dem Standardbeispiel eine übliche Verarbeitungshilfe, jeweils in einem Anteil von 2 Gewichtsteilen beigemengt.

Der Polymerverschnitt in sämtlichen Mischungsrezepturen bestand aus Naturkautschuk, in Lösung hergestelltem Styrolbutadienkautschuk (S-SBR) und Cis-Butadienkautschuk (Cis-BR). Die Kautschukkomponente kann jedoch davon abweichend gewählt werden, enthält aber mindestens ein Polymer aus der Gruppe: Naturkautschuk, Polyisoprenkautschuk, Cis- oder Vinylpolybutadienkautschuk, Styrolbutadienkautschuk (in Emulsion oder in Lösung hergestellt) oder Gemische aus diesen, wobei ferner Zusätze von Butylkautschuk, Halobutylkautschuk oder 3,4-lsoprenkautschuk möglich sind.

Was den Kieselsäureanteil betrifft, kann im Rahmen der vorliegenden Erfindung grundsätzlich jede fein verteilte gefällte Kieselsäure eingesetzt werden, wie sie üblicherweise bei der Herstellung von Kautschukmischungen verwendet wird. Dabei werden insbesondere solche Kieselsäuren als Füllstoff eingesetzt, die eine BET-Fläche von 40 bis 350 m²/g, insbesondere von 100 bis 250 m²/g, eine CTAB-Fläche von 50 bis 350 m²/g, vorzugsweise von 100 bis 250 m²/g, und einen mittleren Teilchendurchmesser von 10 bis 150 µm, vorzugsweise 10 bis 100 µm und eine DBP-Absorbtion von 50 bis 350 ml pro 100 g, vorzugsweise 150 bis 250 ml pro 100 g, besitzen.

Die Kieselsäure wird bevorzugt zusammen mit einem Silankupplungsmittel eingesetzt; wobei vor allem schwefelhaltige Silane geeignet sind, wie etwa Silane, die ausgewählt werden aus Bis (3-Triethoxylsilylpropyl) - Tetrasulfid (TESPT, mit Ruß im Verhältnis 1 zu 1 vermischt als Handelsprodukt X50S der Firma Degussa im Handel erhältlich), 3-Mercaptopropyltriethoxysilan und 3-Thiocyanatopropyltrimethoxsilan.

Das Silankupplungsmittel wird in einer Menge von 0,2 bis 10 Gewichtsteilen, vorzugsweise 0,5 bis 7 Gewichtsteilen eingesetzt. Eine erfindungsgemäße Kautschukmischung kann, muß aber nicht Ruß enthalten. Geeignet sind dabei die handelsüblichen und üblicherweise in Kautschukmischungen für Laufstreifen eingesetzten Ruße, die dem Fachmann bekannt sind. Der Rußanteil beträgt insbesondere 10 bis 20 Gewichtsteile, bevorzugt bis zu 70 Gewichtsteile.

Die Kautschukmischung enthält ferner die bereits oben erwähnten üblichen Mischungsbestandteile in den für Laufstreifenmischungen üblichen Gewichtsteilen.

Aus sämtlichen Mischungsrezepturen wurden Laborproben erstellt und einige Labortests durchgeführt. Folgende Testverfahren wurden dabei angewandt:

Mooney-Viskosität (ML 1 + 3, 100 °C): gemäß DIN 53523, Teil 3. Festigkeit bei Bruch, Dehnung bei Bruch und Spannungswert bei 100 % und 300 % Dehnung: gemäß DIN 53504.
Härte Shore A: gemäß DIN 53505, jeweils bei Raumtemperatur (RT), bei -10 °C und bei 70 °C.
Rückprallelastizität: gemäß DIN 53512, jeweils bei Raumtemperatur (RT) und bei 70°C.
Kerbzähigkeit: gemäß DIN 53515, jeweils bei 70 °C.
Druckverformungsrest (Compression set B): gemäß DIN 53517, jeweils bei 70 C.

Die Standardmischung enthielt als Verarbeitungshilfe Pentaerythrit-tri-Stearat, die Vergleichsmischungen V₁ und V₂ bekannte viskositätssenkende Substanzen, und zwar Polyethylenglykol 1500 und Glycerin. Die Kautschukmischungen E1 bis E4 enthielten erfindungsgemäße nichtaromatische viskositätssenkende Substanzen.

Anhand der ermittelten Werte für die Mooney- Viskosität nach Fertigstellung der rohen Kautschukmischungen läßt sich die deutlich herabgesetzte Viskosität der erfindungsgemäßen Mischungen E1 bis E4 erkennen. Dabei wurde festgestellt, daß sämtliche erfindungsgemäß erstellten Mischungen generell in ihrer Mischbarkeit und auch in ihrer Verarbeitbarkeit, insbesondere der Spritzbarkeit, deutlich gegenüber der Standard- und den beiden Vergleichsmischungen verbessert waren.

Anhand der weiteren durchgeführten Labortests von ausvulkanisierten Proben wurde festgestellt, daß die aus den Mischungsrezepturen E1, E2, E3 erstellten Vulkanisate etwa gleiches Niveau zeigten wie die Vulkanisate aus der Standardmischungen und den beiden Vergleichsmischungen V1 und V2. Beim Vulkanisat aus der Mischung E4 ergaben sich höhere Spannungswerte, eine höhere Härte und eine höhere Rückprallelastizität, was eine Erniedrigung des Anteils an Silan gestatten würde.

**TABELLE 1**

| | | Standard | V1 | V2 | E1 | E2 | E3 | E4 |
|---|---|---|---|---|---|---|---|---|
| Naturkautschuk | K% | 10 | 10 | 10 | 10 | 10 | 10 | 10 |
| S-SBR | K% | 55 | 55 | 55 | 55 | 55 | 55 | 55 |
| cis-BR | K% | 35 | 35 | 35 | 35 | 35 | 35 | 35 |
| Aktiv-Ruß | K% | 15 | 15 | 15 | 15 | 15 | 15 | 15 |
| Kieselsäure gefällt | K % | 70 | 70 | 70 | 70 | 70 | 70 | 70 |
| Silan TESPT | K% | 2,5 | 2,5 | 2,5 | 2,5 | 2,5 | 2,5 | 2,5 |
| **Pentaerythrit-tri-stearat** | K% | 2 | | | | | | |
| **Polyethylenglykol 1500** | K% | | 2 | | | | | |
| **Glycerin** | K% | | | 2 | | | | |
| **Glycerin-mono-Stearat** | K% | | | | 2 | | | |
| **Sorbitan-mono-Stearat** | K% | | | | | 2 | | |
| **Sorbitan-mono-Oleat** | K% | | | | | | 2 | |
| **Trimethylolpropan** | K% | | | | | | | 2 |
| Arom.Öl | K% | 24 | 24 | 24 | 24 | 24 | 24 | 24 |
| Zink-Fettsärue-Seife | K% | 2 | 2 | 2 | 2 | 2 | 2 | 2 |
| Stearinsäure | K% | 1 | 1 | 1 | 1 | 1 | 1 | 1 |
| Zinkweiß | K% | 2 | 2 | 2 | 2 | 2 | 2 | 2 |
| Alterungsschutzmittel | K% | 2,4 | 2,4 | 2,4 | 2,4 | 2,4 | 2,4 | 2,4 |
| Lichtschutzwachs | K% | 2 | 2 | 2 | 2 | 2 | 2 | 2 |
| DPG | K % | 2 | 2 | 2 | 2 | 2 | 2 | 2 |
| CBS | K % | 1,5 | 1,5 | 1,5 | 1,5 | 1,5 | 1,5 | 1,5 |
| Schwefel | K% | 1,5 | 1,5 | 1,5 | 1,5 | 1,5 | 1,5 | 1,5 |
| | | | | | | | | |
| ML 1+3 100 °C | | 118 | 114 | 108 | 99 | 100 | 104 | 90 |
| | | | | | | | | |
| | | | | | | | | |
| Festigkeit bei Bruch | N/mm² | 15,4 | 16,3 | 14,7 | 14,7 | 14,2 | 14,1 | 15,7 |
| Dehnung bei Bruch | % | 726 | 708 | 630 | 721 | 715 | 689 | 626 |
| Spannungswert bei 100% D | N/mm² | 1,7 | 1,8 | 2,1 | 1,6 | 1,6 | 1,6 | 2 |
| Spannungswert bei 300% D | N/mm² | 5,4 | 6,2 | 6,8 | 5,2 | 5,1 | 5,3 | 6,7 |
| Härte Shore A -10 °C | Shore A | 73 | 74 | 75 | 72,5 | 71,5 | 71 | 74,5 |
| Härte Shore A RT | Shore A | 64,4 | 63 | 67 | 63,7 | 62,9 | 63,8 | 67,6 |
| Rückprallelastizität RT | % | 36 | 35 | 36 | 35 | 36,3 | 35,8 | 35,4 |
| Härte Shore A 70 °C | Shore A | 60,2 | 60,6 | 65 | 60,6 | 59,9 | 60,4 | 64,6 |
| Rückprallelastizität 70°C | % | 44,9 | 44,8 | 46,6 | 45,6 | 45,1 | 45 | 48,3 |
| Kerbzähigkeit 70 °C | N/mm | 51,1 | 53,7 | 41,9 | 45,3 | 45,3 | 48 | 35,4 |
| | | | | | | | | |
| **nach Alterung in 70° Luft** | d | 14 | 14 | 14 | 14 | 14 | 14 | 14 |
| Festigkeit bei Bruch | N/mm² | 15,9 | 16,1 | 14,6 | 15,6 | 15,4 | 14,9 | 13,8 |
| Dehnung bei Bruch | % | 581 | 575 | 431 | 605 | 592 | 568 | 443 |
| Spannungswert bei 100% D | N/mm² | 2,5 | 2,7 | 3,1 | 2,4 | 2,4 | 2,4 | 3 |
| Spannungswert bei 300% D | N/mm² | 8,1 | 8,8 | 9,9 | 7,8 | 7,7 | 7,9 | 9,7 |
| Härte Shore A RT | Shore A | 70,9 | 71 | 73,5 | 69,6 | 70,4 | 70,1 | 72,5 |
| Rückprallelaslizität RT | % | 40,3 | 39,2 | 39,8 | 40,2 | 40,2 | 40,4 | 39,4 |
| Härte Shore A 70 °C | Shore A | 68,3 | 68,7 | 71,2 | 67,9 | 69,2 | 68,4 | 70,7 |
| Rückprallelastizität 70 °C | % | 47 | 47,2 | 50,5 | 49,1 | 49,2 | 49,3 | 51,5 |
| Kerbzähigkeit 70 °C | N/mm | 32,8 | 33,2 | 36,1 | 33,3 | 39,8, | 41,1 | 35,9 |
| **Compression set B 70 °C** | % | 28 | 26 | 22 | 28 | 28 | 28 | 20 |

## Patentansprüche

1. Vulkanisierbare Kautschukmischung für den Laufstreifen eines Fahrzeugreifens, auf der Basis zumindest eines Polymers aus der Gruppe der Dienkautschuke, enthaltend weiters, jeweils bezogen auf 100 Gewichtsteile Kautschuk in der Mischung, 5 bis 100 Gewichtsteile fein verteilte gefällte Kieselsäure, 0 bis 80 Gewichtsteile Ruß, gegebenenfalls 0,2 bis 10 Gewichtsteile Silankupplungsmittel und 0,5 bis 20 Gewichtsteile zumindest einer nichtaromatischen viskositätssenkenden Substanz, **dadurch gekennzeichnet, daß** die viskositätssenkende nichtaromatische Substanz zumindest eine Substanz aus der Gruppe 1,2-Pentandiol, 2-Methyl-2-Propyl-1,3-Propandiol, 2-Butyl-2-Ethyl-1,3-Propandiol, 2-sec-Butyl-2-Methyl-1,3-Propandiol, Trimethytolpropan (2-Ethyl-2-Hydroxymethyl-1,3-Propandiol) Glycerin-mono-Stearat, Sorbitan-mono-Stearat oder Sorbitan-mono-Oleat umfaßt.

2. Kautschukmischung nach Anspruch 1, **dadurch gekennzeichnet, daß** der Anteil an viskositätssenkender Substanz zwischen 1 und 10 Gewichtsteilen, bezogen auf 100 Gewichtsteile Kautschuk in der Mischung, beträgt.

3. Fahrzeugreifen mit einem Laufstreifen, der zumindest zum Teil aus der vulkanisierten Kautschukmischung nach Anspruch 1 oder 2 besteht.

## Claims

1. Vulcanisable rubber mixture for the tread strip of a vehicle tyre, based on at least one polymer from the group of diene rubbers and also containing, each relative to 100 parts by weight rubber in the mixture, 5 to 100 parts by weight finely divided, precipitated silica, 0 to 80 parts by weight carbon black, possibly 0.2 to 10 parts by weight silane coupling agent and 0.5 to 20 parts by weight of at least one non-aromatic, viscosity-lowering substance, **characterised in that** the viscosity-lowering, non-aromatic substance includes at least one substance from the group 1,2-pentane diol, 2-methyl-2-propyl-1,3-propane diol, 2-butyl-2-ethyl-1,3-propane diol, 2-sec-butyl-2-methyl-1,3-propane diol, trimethylol propane (2-ethyl-2-hydroxymethyl-1,3-propane diol), glycerin-mono-stearate, sorbitan-mono-stearate or sorbitan-mono-oleate.

2. Rubber mixture according to claim 1, **characterised in that** the proportion of viscosity-lowering substance is between 1 and 10 parts by weight, relative to 100 parts by weight rubber in the mixture.

3. Vehicle tyre, having a tread strip which comprises, at least partially, the vulcanised rubber mixture according to claim 1 or 2.

## Revendications

1. Composition de caoutchouc vulcanisable pour les bandes de roulement d'un pneu de véhicule, sur la base d'au moins un polymère du groupe des caoutchoucs diéniques, qui contient en outre à chaque fois, sur la base de 100 parties en masse de caoutchouc dans la composition, de l'acide silique précipité finement divisé dans une quantité comprise entre 5 et 100 parties en masse, du noir de carbone dans une quantité comprise entre 0 et 80 parties en masse, éventuellement un moyen de copulation de silane dans une quantité comprise entre 0,2 et 10 parties en masse et au moins une substance non aromatique qui réduit la viscosité dans une quantité comprise entre 0,5 et 20 parties en masse, **caractérisée en ce que** la substance non aromatique réductrice de viscosité comprend au moins une substance choisie parmi les groupes 1,2-pentanediol, 2-méthyle-2-propyle-1,3-propanediol, 2-butyle-2-éthyle-1,3-propanediol, 2-sec-butyle-2-méthyle-1,3-propanediol, triméthylolpropane(2-éthyle-2-hydroxyméthyle-1,3-propanediol), monostéarate de glycérine, monostéarate de sorbitane ou mono-oléate de sorbitane.

2. Composition de caoutchouc selon la revendication 1 **caractérisée en ce que** la proportion de substance qui réduit la viscosité et qu'on ajoute à la composition de caoutchouc doit être comprise entre 1 et 10 parties en masse sur la base de 100 parties en masse de caoutchouc dans la composition.

3. Pneus de véhicule avec une bande de roulement qui consiste au moins partiellement en la composition de caoutchouc vulcanisé selon la revendication 1 ou 2.
